# NEUE EUROPÄISCHE PATENTSCHRIFT

(11) **EP 2 103 556 B2**
(45) Veröffentlichungstag und Bekanntmachung des Hinweises auf die Entscheidung über den Einspruch: **13.07.2016**
(45) Hinweis auf die Patenterteilung: 10.08.2011
(21) Anmeldenummer: 09003832.4
(22) Anmeldetag: 17.03.2009
(51) Int. Cl.: B65G 57/06, B65G 57/24

(54) **Palettiervorrichtung**
Paletting device
Dispositif de palettisation

(30) Priorität: 20.03.2008 DE 102008015278
(43) Veröffentlichungstag der Anmeldung: 23.09.2009
(73) Patentinhaber: Schaefer Förderanlagen- und Maschinenbau GmbH, 85774 Unterföhring (DE)
(72) Erfinder: Lahartinger, Reinhold, 83052 Bruckmühl (DE)
(74) Vertreter: Thoma, Michael

(56) Entgegenhaltungen:
- EP-A2- 0 257 447
- DE-A1- 3 718 601
- DE-A1- 3 821 292
- DE-A1- 19 700 911
- DE-B- 1 249 166
- DE-T2- 69 615 895
- DE-T2- 69 704 821
- DE-U1- 20 021 874
- DE-U1- 29 907 748
- FR-A- 2 899 203
- GB-A- 1 596 789
- GB-A- 2 115 369
- JP-A- 61 094 927

## Beschreibung

Die vorliegende Erfindung betrifft eine Vorrichtung zum Beladen von Paletten mit Stückgütern wie Getränke- oder Lebensmittelgebinden beispielsweise in Form von Getränkebehälterpacks, mit einem Stapelplatz, einer Stückgutbereltstellungsstation, die zumindest einen untenliegenden Bereitstellungsplatz (15) unterhalb der maximalen Stapelhöhe der auf dem Stapelplatz zu stapelnden Stückgüter aufweist, einer Übersetzvorrichtung zum Übersetzen einer Gruppe von Stückgütern von der Stückgutbereitstellungsstation auf eine an einem Stapelplatz bereitgehaltene Palette bzw. eine bereits darauf übergesetzte Stückgutschicht, wobei die Übersetzvorrichtung zwei separate Unterstützungsebenen, vorzugsweise Ladebleche, aufweist, die mittels einer Verfahrvorrichtung neben dem Stapelplatz auf und ab sowie über dem Stapelplatz aufeinander zu und voneinander weg verfahrbar sind, sowie mit einer Beladevorrichtung zum Beladen zumindest einer der Unterstützungsebenen mit Stückgütern an der Stückgutbereitstellungsstation, einer Abladevorrichtung zum Abladen, insbesondere Herunterschieben, der Stückgüter von der Übersetzvorrichtung beim Auseinanderfahren der Unterstützungsebenen über dem Stapelplatz, sowie einer Steuervorrichtung zur Steuerung der Verfahrbewegungen der Unterstützungsebenen.

Bei derartigen Palettlervorrichtungen, deren Übersetzvorrichtungen mit Ladeblechen arbeiten, auf die die vorbereiteten Stückgutschichten vom Schichtenbildungsplatz auf die Palette bzw. bereits darauf befindliche Schichten übergesetzt werden, unterscheidet man grundsätzlich zwei Typen. Einerseits werden Palettierer mit nur einem Ladeblech wegen ihrer hohen Arbeitsgeschwindigkeit geschätzt Bei derartigen Einblechpaiettierern wird eine gesamte Stückgutschicht für den Palettenstapel auf einem einteiligen Ladeblech platziert, das sodann über die Palette bzw. die darauf bereits befindlichen Stückgutschichten gefahren wird. Um die auf dem Ladeblech befindliche Stückgutschicht abzuladen, wird üblicherweise ein Abstreifer an eine Kante der Stückgutschicht gefahren und sodann das Ladeblech unter der Stückgutschicht zum Abstreifer hin herausgefahren, so dass die Stückgutschicht sozusagen an dem Abstreifer hängen bleibt und auf dem Schichtenstapel zu liegen kommt. Von Vorteil ist hierbei, dass das Ladeblech bereits wieder auf die Seite herausgezogen wird, auf der die Bereitstellungsstation platziert ist, so dass der Weg zurück zur Bereitstellungsstation zwecks einem neuerlichen Beladen sehr kurz ist und kurze Taktzeiten erreicht werden können. Nachteilig ist indes bei derartigen Einblechpalettierern, dass beim Herausziehen des Ladeblechs zu einer Seite hin die auf dem Ladeblech befindlichen Stückgüter ausschließlich an dem Abstreifer ausrichten. Dies kann insbesondere bei Stückgutschichten mit Lücken im Schichtbild Probleme aufwerfen, da sich hierdurch auf der dem Abstreifer gegenüberliegenden Seite der Stückgutschicht unregelmäßige Stapelkanten ergeben können. Durch die im Schichtbild befindlichen Lücken rutschen einzelne Stückgüter zum Abstreifer hin nach, wodurch sich unregelmäßige Außenkanten auf der gegenüberliegenden Seite ergeben.

Um derartigen Problemen im Schichtbild zu entgehen und auch bei Schichtbildern mit Lücken gleichmäßige Außenkanten zu erzielen, werden Palettierer mit geteiltem Ladeblech bzw. mit zwei separaten Ladeblechen geschätzt. Hierbei sind die beiden Ladebleche zunächst zusammengefahren, so dass sie eine gemeinsame Unterstützungsebene bzw. sozusagen ein großes Ladeblech mit einer Schnittstelle in der Mitte bilden, so dass an der Bereitstellungsstation eine Stückgutschicht auf die beiden Ladebleche verteilt geladen werden und sodann über den Stapelplatz übergesetzt werden kann. Befinden sich die beiden Ladebleche unmittelbar über der Palette bzw. einer bereits darauf gestapelten Stückgutschicht, werden die beiden Ladebleche auseinander gefahren, wobei auf gegenüberliegenden Seiten angeordnete Abstreifer dafür sorgen, dass die Stückgutschicht nicht auseinander gezogen wird. Hierdurch wird die Stückgutschicht an gegenüberliegenden Seiten ausgerichtet, so dass auf beiden Seiten klare, gerade Schichtkanten erzielt werden und sich ein ebenmäßiger Schichtenstapel mit geraden Flanken ergibt. Auch bei Schichtbildern mit Lücken ergeben sich höchstens im Inneren der Schicht Verschiebungen, während die wichtigen Außenkanten der Schicht geschlossen bleiben. Derartige Palettierer mit auseinander fahrbaren Ladeblechen haben jedoch bislang den Nachteil, dass die Vorteile hinsichtlich des geraden, präzisen Stapelaufbaus mit einer geringeren Arbeitsgeschwindigkeit erkauft werden. Durch das Auseinanderfahren der Ladebleche zu gegenüberliegenden Seiten hin kommt sozusagen eines der Ladebleche auf der falschen Stapelseite zu liegen, so dass zunächst die Übersetzvorrichtung mit den Stapelblechen nach oben gefahren werden muss, um das genannte zur gegenüberliegenden Seite hin gefahrene Ladeblech über die abgelegte Schicht hinweggefahren werden kann. Zudem müssen in der angehobenen Stellung die Ladebleche erst wieder zusammengefahren werden, um die Ladebleche in der zusammengefahrenen Stellung wieder am Beladeplatz neben der Bereitstellungsstation platzieren zu können. Diese zusätzlichen Bewegungen mögen auf den ersten Blick nicht gravierend erscheinen, jedoch verlängern sie die Taktzeiten bei Hochleistungspalettierern beträchtlich, wodurch die Leistungsfähigkeit derartiger Hochleistungspalettierer deutlich leidet.

Eine solche Palettiervorrichtung mit geteiltem Ladeblech bzw. zwei separaten, auseinanderfahrbaren Ladeblechen ist aus der FR 2 899 203 bekannt. Die Ladebleche sind hierbei an zwei gegenüberliegenden Führungsträgern verschieblich gelagert, so dass beim Beladen der Ladebleche in der abgesenkten Stellung die genannten Führungsträger den Palettenstapel umschließen. FR 2 899 203 offenbart eine Vorrichtung gemäß dem Oberbegriff des Anspruchs 1.

Der Erfindung liegt die Aufgabe zugrunde, eine verbesserte Vorrichtung der eingangs genannten Art zu schaffen, die die Nachteile des Standes der Technik vermeiden und Letzteren in vorteilhafterWeise weiterbilden. Insbesondere soll bei einem mit zwei Ladeblechen arbeitenden Palettierer dessen Vorteile hinsichtlich des Stapelbildes mit einer erhöhten Arbeitsgeschwindigkeit kombiniert werden.

Erfindungsgemäß wird diese Aufgabe durch eine Vorrichtung gemäß Anspruch 1 gelöst Bevorzugte Ausgestaltungen der Erfindung sind Gegenstand derabhängigen Ansprüche.

Es wird also vorgeschlagen, beim Entladen der Übersetzvorrichtung weiterhin mit zwei Ladeblechen zu arbeiten, die zum Entladen auseinander gefahren werden, wodurch das gewünschte, an den Außenkanten präzise Stapelbild erzielt wird. Andererseits wird auf das Wiederzusammenfahren der Ladebleche zum Zwecke des Beladens verzichtet. Beim Beladen an der Stückgutbereitstellungsstation wird mit auseinander gefahrenen Ladeblechen gearbeitet, wodurch die Taktzeit beträchtlich verkürzt und die Palettierleistung beträchtlich erhöht werden kann. Erfindungsgemäß steuert die Steuervorrichtung die Übersetzvorrichtung derart, dass die Unterstützungsebenen zum Beladen auseinander gefahren sind und erst nach dem Beladen während des Übersetzens über der zu beladenden Palette wieder zusammengefahren werden und dass die Unterstützungsebenen über der zu beladenden Palette zum Entladen unter Relativbewegung zur abzusetzenden Stückgutgruppe auseinander gefahren werden. Mit dieser Verwendung zweier Ladebleche bzw. Unterstützungsebenen können hohe Arbeitsleistungen und kurze Taktzeiten erreicht werden, ohne dies durch Einbußen beim Stapelbild und unsauberen Schichtkanten erkaufen zu müssen. Es ist nämlich ein Beladen derübersetzvorrichtung und ein Übersetzen einer vollständigen Stückgutschicht auch mit auseinander gefahrenen Ladeblechen möglich. Erfindungsgemäß ist hierbei die Vorrichtung derart ausgebildet, dass auch während des Beladens der Übersetzvorrichtung mit auseinandergefahrenen Unterstützungsebenen der Stapelplatz zumindest von einer Vorderseite des Stapelplatzes her einen freien Zugang zum Palettenwechsel ohne Wegfahren der Übersetzvorrichtung aufweist. Hierdurch müssen keine besonderen Stillstandszeiten in Kauf genommen werden, die anderenfalls entstünden, wenn die Übersetzvorrichtung in besonderer Weise weggefahren werden muss.

Hierbei können in Weiterbildung der Erfindung verschiedene Verfahrens- bzw. Vorrichtungsmaßnahmen zum Einsatz kommen. In besonders vorteilhafter Weiterbildung der Erfindung kann vorgesehen werden, dass eine auf ein Ladeblech geladene Stückgutschicht bzw. Teil-Stückgutschicht über dem Palettenstapel, nachdem die beiden Ladebleche dort zusammengefahren sind, auf das andere Ladeblech teilweise hinübergeschoben bzw. -gefahren wird, so dass die Stückgutschicht bzw. Teil-Stückgutschicht vor dem Entladen auf beiden Ladeblechen verteilt angeordnet ist und der Entladevorgang durch Auseinanderziehen bzw. -fahren der Unterstützungsebenen erfolgen kann. In Weiterbildung der Erfindung kann hierbei zumindest eine der Unterstützungsebenen ausreichend groß ausgebildet sein, um mehr als nur eine halbe Stückgutschicht aufnehmen zu können. Insbesondere kann die zumindest eine Unterstützungsebene ausreichend breit, d.h. in Richtung der Auseinanderfahrbewegung der beiden Unterstützungsebenen ausreichend bemessen sein, so dass eine gesamte Stückgutschicht entsprechend der zu beladenden Palettenfläche auf diese eine Unterstützungsebene geladen werden kann. Hierdurch kann von nur einem Schichtenbildungsplatz her eine gesamte Stückgutschicht auf eine der Unterstützungsebenen geladen und sodann mittels des nur einen Ladeblechs zum Entladeplatz über der Palette übergesetzt werden. Dort werden die beiden Unterstützungsebenen sodann zusammengefahren, so dass die Stückgutschicht hälftig bzw. zumindest teileweise auf die andere Unterstützungsebene hinübergeschoben werden kann, bevor zum Entladen die beiden Unterstützungsebenen wieder auseinander gefahren werden.

Zum Hinüberfahren auf die andere, herangefahrene Unterstützungsebene ist in Weiterbildung der Erfindung eine Verfahrvorrichtung vorgesehen, die grundsätzlich verschieden ausgebildet werden kann und von der Steuervorrichtung derart angesteuert wird, dass der Verfahrvorgang auf die andere Unterstützungsebene dann in Gang gesetzt wird, sobald die beiden Unterstützungsebenen über dem Stapelplatz zusammengefahren worden sind.

In Weiterbildung der Erfindung kann die genannte Verfahrvorrichtung als Überschiebevorrichtung ausgebildet sein und einen verfahrbar ausgebildeten Schieber besitzen, der vorzugsweise parallel zu der beladenen Unterstützungsebene relativ zu dieser auf die andere Unterstützungsebene zu verfahren werden kann. Der Schieber wird dabei von einer geeigneten Schieberantriebsvorrichtung angetrieben und kann beispielsweise in Form eines balkenförmigen Anschlagschiebers ausgebildet sein, der die Außenkanten der hinüberzuschiebenden Stückgutschicht ausrichtet.

Die Unterstützungsebene kann hierbei grundsätzlich mit einer starren Oberfläche ausgebildet sein, so dass die Stückgutschicht von dem genannten Schieber unter Überwindung der Reibung über die Unterstützungsebene geschoben wird. Um den Schiebewiderstand zu verringern, kann zumindest eine Unterstützungsebene mit einer beweglichen Oberfläche ausgestattet sein, beispielsweise in Form einer umlaufenden Matte, eines Rollenteppichs, einer Rollenbahn, umlaufender Ketten oder ähnlicher beweglicher Bodeneinrichtungen, wobei vorteilhafterweise beide Unterstützungsebenen mit einer solchen beweglichen Oberfläche versehen sein können, um nicht nur auf der Unterstützungsebene, von der die Stückgutschicht abgeschoben wird, sondern auch auf deranderen Unterstützungsebene, auf die die Stückgutschicht hinübergeschoben wird, die Reibung reduziert werden kann.

In Weiterbildung der Erfindung können die Unterstützungsebenen auch mit derartigen beweglichen Oberflächen versehen sein, die dabei antreibbar ausgebildet sind bzw. denen einen geeignete Antriebsvorrichtung zugeordnet ist, so dass die Bewegung der jeweiligen Oberfläche aktiv in Gang gesetzt und gestoppt werden kann. Ein solcher antreibbarer Förderboden auf den Unterstützungsebenen kann zusätzlich, insbesondere aber auch alternativ zu dem vorgenannten Schieber eingesetzt werden. Um die Stückgutschicht teilweise auf die andere Unterstützungsebene hin-überzuschieben, wird lediglich der Förderboden in Gang gesetzt, so dass die Stückgutschicht sozusagen auf die andere Unterstützungsebene hinüberwandert.

Ein derartiger antreibbarer Förderboden an den Unterstützungsebenen kann auch als Abladevorrichtung eingesetzt werden. Beim Auseinanderfahren der beiden Unterstützungsebenen werden die auf diesen vorgesehenen Förderboden gegenläufig in Gang gesetzt, vorteilhafterweise mit jeweils einer Fördergeschwindigkeit, die mindestens so groß ist, wie die Geschwindigkeit, mit der diebeiden Unterstützungsebenen auseinander gefahren werden. Hierdurch wird sichergestellt, dass das Auseinanderziehen der Unterstützungsebenen das Schichtenbild nicht verändert. Anstelle einer solchen antreibbaren beweglichen Oberfläche kann jedoch auch schon eine nicht antreibbare, bewegliche Oberfläche an den Unterstützungsebenen beim Abladen vorteilhaft sein und ggf. auch ausreichen, um unerwünschte Veränderungen im Schichtenbild zu verhindern.

Alternativ oder zusätzlich zu derartigen bewegbaren Oberflächen an den Unterstützungsebene kann zum Abladen der Stückgutschicht jedoch grundsätzlich auch eine Abstreifvorrichtung vorgesehen sein, die auf gegenüberliegenden Seiten der abzuladenden Stückgutschicht bzw. auf gegenüberliegenden Seiten der zusammengefahrenen Unterstützungsebenen angeordnete Abstreifer umfasst, mit denen die Stückgutschicht beim Auseinanderfahren der Unterstützungsebenen in Anlage kommt. Diese Abstreifer verhindern ein Auseinanderziehen der abzuladenden Stückgutschicht, so dass ggf. auch mitfesten Oberflächen an den Unterstützungsebenen gearbeitet werden kann.

Diese Abstreifer können vorteilhafterweise mittels einer geeigneten Antriebsvorrichtung aktiv verfahrbar sein, so dass einer der Abstreifer auch als Schieber zum Hinüberschieben der Stückgutschicht auf die jeweils andere Unterstützungsebene in der zuvor genannten Weise genutzt werden kann.

Das teilweise Hinüberschieben bzw. Hinüberfahren der auf einem Ladeblech befindlichen Stückgutschicht bzw. Teil-Stückgutschicht auf die jeweils andere Unterstützungsebene ist jedoch nicht zwangsweise erforderlich. Gemäß einer weiteren vorteilhaften Ausführung der Erfindung können nämlich auch beide Unterstützungsebenen in ihrem auseinander gefahrenen Zustand mit jeweils einer Teil-Stückgutschicht, insbesondere einer halben Stückgutschicht beladen werden, die dann oberhalb der Stapelstation bzw. derzu beladenden Palette beim Zusammenfahren der Unterstützungsebenen zu einervollständigen Stückgutschichtvereinigtwerden. Hierzu kann in vorteilhafter Weiterbildung der Erfindung vorgesehen sein, dass die Stückgutbereitstellungsstation mehrspurig, insbesondere zumindest zweispurig ausgebildet ist und auf gegenüberliegenden Seiten der Stapelstation jeweils einen Bereitstellungsplatz aufweist, von denen her beiden Unterstützungsebenen beladen werden können, wenn sie auseinandergefahren sind und auf den gegenüberliegenden Seiten der Stapelstation zum Beladen bereitgehalten werden. Die Beladevorrichtung umfasst in diesem Fall vorteilhafterweise zwei Beladeeinheiten, so dass von beiden Seiten her die auseinander gefahrenen Unterstützungsebenen beladen werden können.

Vorteilhafterweise kann hierbei derart vorgegangen werden, dass auf jeder Unterstützungsebene jeweils eine halbe Stückgutschicht aufgeladen wird. Ggf. kann jedoch auch beispielsweise auf einer Unterstützungsebene zwei Drittel einer Stückgutschicht und auf der anderen Unterstützungsebene ein Drittel der Stückgutschicht geladen werden, so dass dann in der zuvor genannten Weise nach dem Zusammenfahren der Unterstützungsebenen über der zu beladenden Palette mittels der zuvor genannten Überschiebevorrichtung die zwei Drittel Stückgutschicht teilweise auf die andere Unterstützungsebene hinübergeschoben und somit beide Stückgutschichtteile vereinigt werden.

Besonders von Vorteil ist das beschriebene Auseinanderhalten der Unterstützungsebenen beim Beladen dann, wenn der Zulauf untenliegend erfolgt und/ oderdie Bereitstellungsstation einen untenliegenden Bereitstellungsplatz besitzt, der unterhalb der maximalen Stapelhöhe auf der Palette liegt, vorzugsweise etwa auf halber Höhe zwischen Palettenniveau und maximaler Stapelhöhe angeordnet ist, da in diesem Fall über den gesamten Stapelvorgang betrachtet die kürzesten Hubwege zu fahren sind und damit die kürzesten Taktzeiten erreicht werden.

Vorteilhafterweise ist die Vorrichtung derart ausgebildet, dass während des Beladens mit den auseinander gefahrenen Unterstützungsebenen die Stapelstation auch von oben her frei zugänglich ist, um zwischen die übereinander zu stapelnden Stückgutschichten Zwischenlagen beispielsweise in Form von Pappe einlegen zu können, ohne hierdurch besondere Stillstandszeiten in Kauf nehmen zu müssen, die anderenfalls entstünden, wenn die Übersetzvorrichtung in besonderer Weise weggefahren werden muss. Vorteilhafterweise kann die Vorrichtung dabei derart ausgebildet sein, dass der Stapelplatz bzw. die jeweils oberste, auf der Palette liegende Stückgutschicht zumindest von einer vorderen Seite her auch während des Übersetzvorganges zugänglich bleibt, um während dieser Teilzeit des Taktes eine Zwischenlage ein-bzw. auflegen zu können. Die Vorrichtung umfasst hierzu in vorteilhafter Weise eine geeignete Zwischenlagen-Einlegevorrichtung, die beispielsweise in Form eines von einer vorderen Seite her auf den Stapelplatz zu und von diesem wieder weg beweglichen Zwischenlagenträger aufweisen kann.

Um einen freien Zugang zum Stapelplatz in der genannten Weise zu erzielen, kann in vorteilhafter Welterbildung der Erfindung vorgesehen sein, dass die Unterstützungsebenen an Schlitten angeordnetsind, die jeweils aufeinander zu und voneinander weg vorzugsweise in horizontaler Richtung an einem Hubkopf beweglich gelagert sind. Den Schlitten kann hierbei ein geeignet ausgebildeter Antrieb zugeordnet sein, der eine synchrone Verfahrbewegung der beiden Schlitten aufeinander zu und voneinander weg ermöglicht. Dies kann durch eine geeignete Koppelung der beiden Schlitten erreicht werden, die auch durch eine elektronische Antriebskoppelung bzw. -synchronisierung erreicht werden kann.

Der jeweilige Hubkopf ist hierbei vorteilhafterweise auf einer hinteren Seite des Stapelplatzes angeordnet und an einem Hubwerk höhenverfahrbar gelagert, von dem die Unterstützungsebenen nach Art von Gabelstaplerzinken zum Stapelplatz hin vorspringen. Hierdurch bleibt die vordere Seite des Stapelplatzes frei zugänglich. Zudem bleibt die Palette bzw. die darauf befindlichen, schon abgelegten Stückgutschichten auch von oben her frei zugänglich, wenn die Unterstützungsebenen zum Zwecke des Beladens auseinander gefahren und rechts und links neben dem Stapelplatz positioniert sind.

Die Unterstützungsebenen können grundsätzlich verschieden ausgebildet sein, beispielsweise von geeigneten Trägerstücken gebildet sein oder in anderer Weise ausgebildete Ladeflächen besitzen, die vorzugsweise eben konfiguriert sind. Insbesondere können die Unterstützungsebenen von Ladeblechen gebildet sein, die eine feste Oberfläche besitzen können, jedoch auch in der zuvor genannten Welse mit einem Rollenteppich, einer umlaufenden Matte oder Förderbändern oder dergleichen versehen sein können.

Die vorliegende Erfindung wird nachfolgend anhand zweier bevorzugter Ausführungsbeispiele und zugehörigen Zeichnungen näher erläutert. In den Zeichnungen zeigen:
- Fig. 1:: eine Seitenansicht einer Palettiervorrichtung von einer Vorderseite her nach einer vorteilhaften Ausführung der Erfindung, wonach nur auf einer Seite des Stapelplatzes eine Stückgutbereitstellungsstation vorgesehen ist,
- Fig. 2:: eine Draufsichtauf die Palettiervorrichtung aus Fig. 1 von oben,
- Fig. 3:: eine Seitenansicht der Palettiervorrichtung ähnlich Fig. 1, wobei eine zu stapelnde Stückgutschichtauf eine der seitlich vom Stapelplatz bereitge- haltenen Unterstützungsebenen geladen wurde,
- Fig. 4:: eine Seitenansicht der Palettiervorrichtung ähnlich Fig.1 und 3, wobei die auf die Unterstützungsebene geladene Stückgutschicht angehoben und die beiden Unterstützungsebenen über dem Stapelplatz zusammenge- fahren sind,
- Fig. 5:: eine Frontansicht der Palettiervorrichtung ähnlich den Figuren 1,3 und 4, wobei die abzusetzende Stückgutschicht nach dem Zusammenfahren der Unterstützungsebenen teilweise auf die andere Unterstützungsebene hinübergeschoben wurde,
- Fig. 6:: eine Frontansicht der Palettiervorrichtung ähnlich den Figuren 1, 3, 4 und 5, wobei die Unterstützungsebenen auseinander gefahren und unter der abzusetzenden Stückgutschicht herausgezogen wurden, und
- Fig. 7:: eine Frontansicht einer Palettiervorrichtung ähnlich Fig. 1 nacheinerwei-terenAusführung der Erfindung, wonach die Stückgutbereitstellungssta- tion zwei Bereitstellungsplätze auf gegenüberliegenden Seiten des Sta- pelplatzes aufweist, um beide Unterstützungsebenen beladen zu kön- nen.

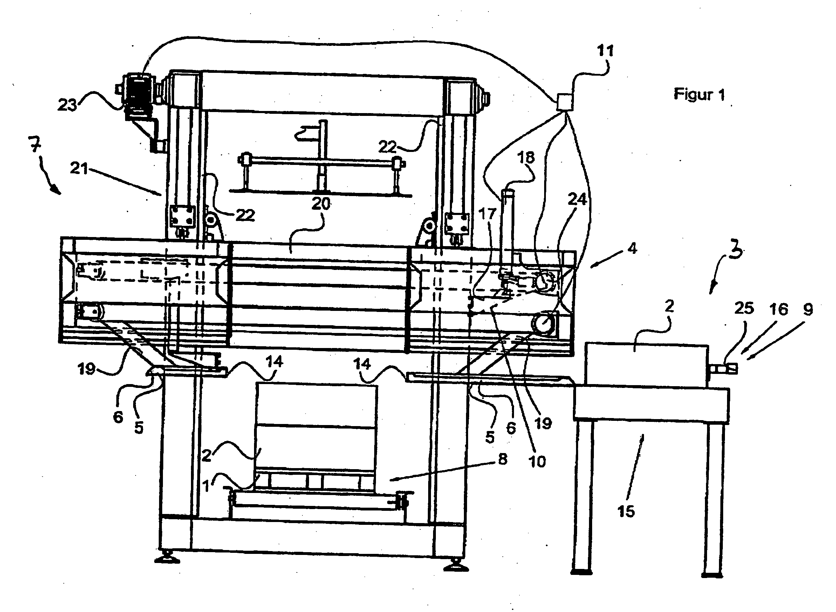

Die in den Figuren 1 bis 6 gezeichnete Vorrichtung umfasst eine an sich bekannte Stückgutbereitstel- , lungsstatlon 3 mit einem Bereitstellungsplatz bzw. Schichtenbildungsplatz 15, auf dem diverse Stückgüter wie beispielsweise Getränkepacks in Form von Tetrapacks oder Dosen angeliefert und gesammelt sowie zu einer Schicht zusammengestellt werden.

Neben der Stückgutbereitstellungsstation 3 ist ein Stück weit von dieser beabstandet der Stapelplatz 8 vorgesehen, auf dem eine Palette 1 bereitgehalten wird, auf der die Stückgutschichten aufgestapelt werden, wie dies die Figuren zeigen.

Um die Stückgutschichten von dem Bereitstellungsplatz 15 auf den Stapelplatz 8 überzusetzen, ist die Übersetzvorrichtung 4 vorgesehen, die ein hinter dem Stapelplatz 8 angeordnetes Hubwerk 21 mit in der gezeichneten Ausführung zwei im Wesentlichen vertikalen Hubwerksführungen 22 umfasst, an denen ein in der gezeichneten Ausführung traversenförmiger Hubkopf 20 höhenverstellbargelagert ist, wobei ein Hubwerksantrieb 23 zur Höhenverstellung des Hubkopfs 20 an dem Hubwerk 21 gelagert sein kann, vgl. Fig. 1.

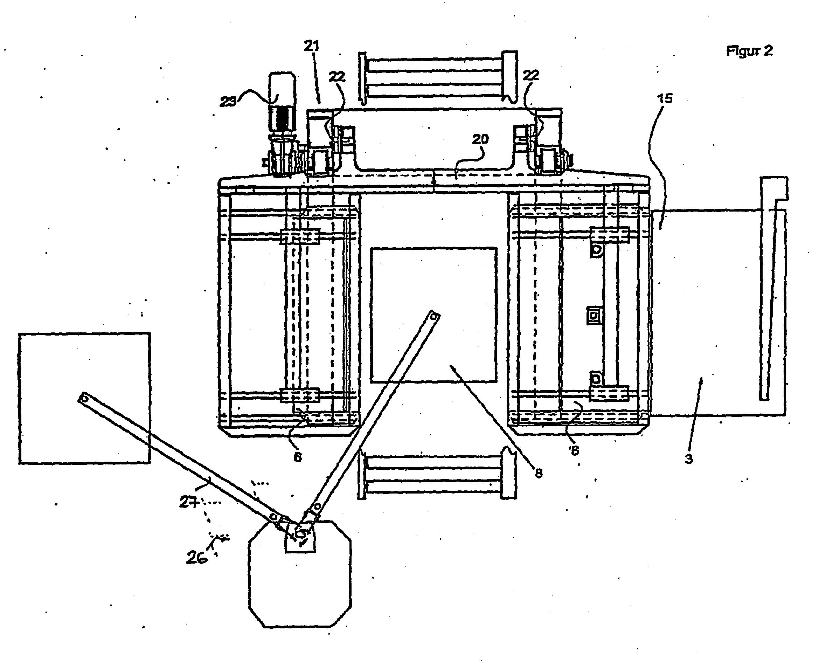

An dem Hubkopf 20 sind zwei Schlitten 19 horizontal verschieblich gelagert und mittels eines Querantriebs 24 aufeinander zu und voneinander weg verfahrbar. Der Querantrieb 24 sowie der Hubwerksantrieb 23 bilden zusammen eine Bewegungsvorrichtung 7, mittels derer an den Schlitten 19 befestigte Ladebleche 6 neben dem Stapelplatz 8 auf und ab gefahren sowie über dem Stapelplatz 8 auseinander und zusammengefahren werden können, wie dies ein Vergleich der Figuren 1 bis 6 zeigt. Die Bewegungsvorrichtung 7 ist dabei zusammen mit dem Hubkopf 20, dem Hubwerk 21 und den Schlitten 19 derart ausgebildet, dass der Stapelplatz 8 von vorne, d.h. aus der Blickrichtung von Fig. 1 frei zugänglich bleibt und überdies auch von oben her frei zugänglich ist, zumindest dann, wenn die Ladebleche 6 auseinander gefahren sind, wie dies Fig. 1 zeigt. Das Hubwerk 21 ist zusammen mit dem Hubkopf 20 hinter dem Stapelplatz 8 angeordnet, vgl. Fig. 2, wobei die Ladebleche 6 nach Art von Gabelstaplerzinken nach vorne vorspringen.

Die Ladebleche 6 bilden im Wesentlich horizontal ausgerichtete Unterstützungsebenen 5, wobei anstelle von Ladeblechen auch grundsätzlich andere Träger-profile wie beispielsweise ein Stabrost oder dergleichen vorgesehen sein könnte. Obwohl in der Zeichnung nicht eigens dargestellt, kann vorteilhafterweise auf den Ladeblechen 6 jeweils eine bewegliche Oberfläche vorgesehen sein, beispielsweise in Form einer umlaufenden Matte, eines umlaufenden Förderbandes, eines Rollenteppichs oder dergleichen, deren Bewegungsachse parallel zu der Verfahrachse der Schlitten ausgerichtet ist, so dass die zu stapelnden Stückgutschichten leichter auf die und über die Ladebleche 6 geschoben werden können.

Die diversen Antriebe einschließlich eines ggf. vorhandenen Antriebs für die genannten beweglichen Oberflächen der Ladeblech 6 werden von einer zentralen elektronischen Steuervorrichtung 11 angesteuert, um den aus den Figuren 1 bis 6 ersichtlichen Arbeitszyklus auszuführen:

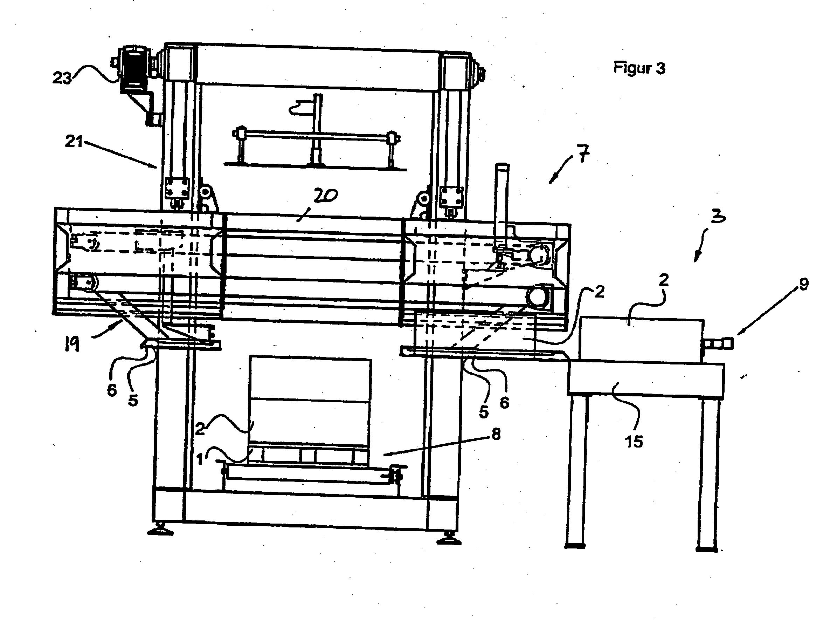

In der aus den Figuren 1 und 2 ersichtlichen Beladestellung, in derdie Ladebleche 6 mittels der Schlitten 19 auseinander gefahren sind und rechts und links neben dem Stapelplatz 8 bereitgehalten werden, wird eine am Bereitstellungsplatz 15 gebildete Stückgutschicht mittels einer geeigneten Beladevorrichtung 9 auf das in Fig. 1 rechte Ladeblech 6 geladen. Die Beladevorrichtung 9 kann hierbei verschieden ausgebildet sein und beispielsweise den in der Fig. 1 gezeigten Beladeschieber 25 umfassen, mit dem eine gebildete Stückgutschicht auf das Ladeblech 6 hinübergeschoben wird, wie dies ein Vergleich der Figuren 1 und 3 zeigt. Die Ladebleche 6 werden hierbei vorteilhafterweise im Wesentlichen höhenbündig mit dem Bereitstellungsplatz 15 platziert, der grundsätzlich in verschiedener Höhe und in vorteilhafter Ausführung als der in Fig. 1 gezeichnete untere Zulauf platziert sein kann.

Das in Fig. 1 rechte Ladeblech 6 ist hierbei von seiner Größe her ausreichend bemessen, um eine ganze Stückgutschicht entsprechend der Palettenfläche aufnehmen zu können, wobei insbesondere die Breite in Richtung der Schlittenverfahrrichtung ausreichend groß ist, wie dies Fig. 1 zeigt

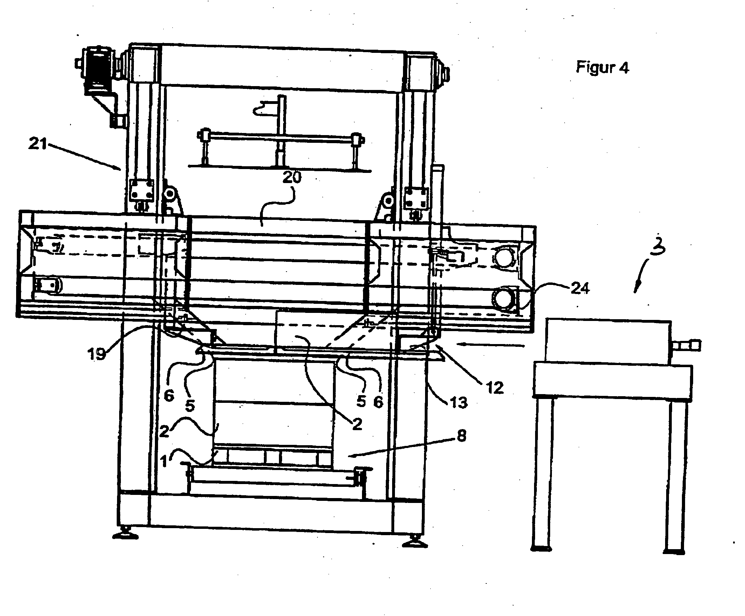

Nachdem die Stückgutschicht auf die Unterstützungsebene 5 des genannten Ladeblechs 6 hinübergeschoben ist, wird der Hubkopf 20 in geeigneter Weise höhenverstellt, um die noch auseinander gefahrenen Ladebleche 6 über dem Stapelplatz 8, d.h. über der dort bereitgehaltenen Palette 1 und/oder den darauf aufgestapelten, zuvor abgelegten Stückgutschichten zusammenfahren zu können, wie dies Fig. 4 zeigt. Der Hubkopf 20 und die Anordnung der Schlitten 19 bzw. der daran befestigten Ladebleche 6 ist dabei vorteilhafterweise symmetrisch zur Längsmittelebene des Bereitstellungsplatzes 8 getroffen bzw. steuert die Steuervorrichtung 11 die Schlittenverfahrantriebe bzw. Querantriebe 24 derart an, dass in der zusammengefahrenen Stellung der Ladebleche 6 die Schnittstelle zwischen diesen mittig über dem Stapelplatz 8 liegt, vgl. Fig. 4.

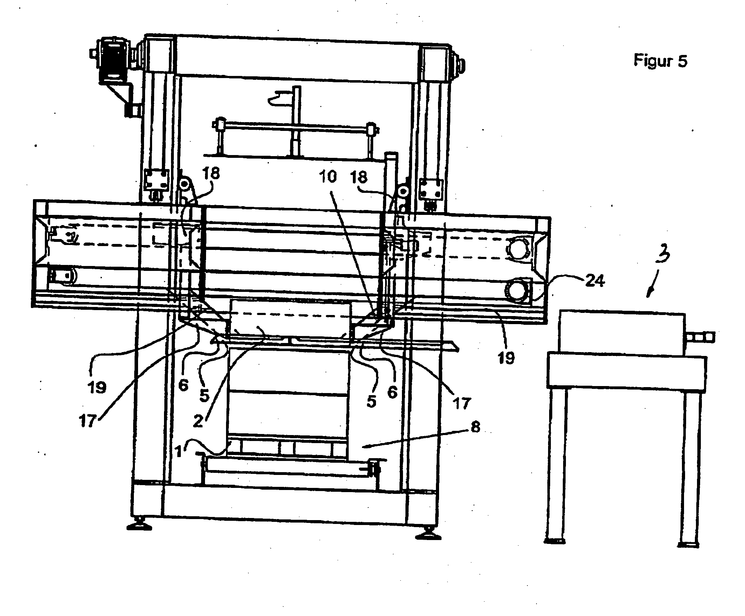

Sind die Ladebleche 6 über dem Stapelplatz 8 zusammengefahren, wird die auf dem bislang einen Ladeblech befindliche Stückgutschichtteilweise auf das andere Ladeblech hinübergeschoben, vgl. Figuren 4 und 5. Die hierfür vorgesehen Überschiebevorrichtung 12 kann in der eingangs genannten Weise unterschiedlich ausgebildet sein, wobei in der gezeichneten Ausführung ein Schieber 13 vorgesehen ist, der an dem Hubkopf 20 und/oder dem Schlitten 19 querverschieblich, d.h. gemäß Fig. 4 von rechts nach links verschiebbar ist, um die Stückgutschicht hinüberzuschieben.

Ist die Stückgutschicht hinübergeschoben und mittig über der Palette 1 platziert, werden die Ladebleche 6 auseinander gefahren und unter der abzuladenden Stückgutschicht herausgezogen. Um hierbei zu verhindern, dass die Stückgutschicht auseinander gezogen wird oder verrutscht, ist eine Abladevorrichtung 10 vorgesehen, die in der gezeichneten Ausführung zwei Abstreifer 17 aufweist, die auf gegenüberliegenden Selten an die Seitenkanten der abzuladenden Stückgutschicht gefahren werden, so dass die entsprechenden Stückgutschichtkanten beim Auseinanderfahren der Ladebleche 6 an die genannten Abstreifer 17 zur Anlage kommen. Die Abstreifer 17 erstrecken sich hierbei vorteilhafterweise nach Art von Anschlägen über die gesamte Länge bzw. Tiefe der zurückzuhaltenden Schichtkanten, so dass sich diese daran ausrichten können. In der gezeichneten Ausführung sind die Abstreifer 17 am Hubkopf 20 höhenverfahrbar gelagert und durch einen Abstreiferantrieb 18 betätigbar. Es versteht sich jedoch, dass auch andere Beweglichkeiten wie beispielsweise ein Einschwenken realisiert werden könnten. Alternativ oderzusätzlich zu den genannten Abstreifern 17 könnte die Abladevorrichtung 10 auch an den Unterstützungsebenen 5 vorgesehene bewegliche Oberflächen beispielsweise in Form einer umlaufenden, antreibbaren Matte aufweisen, die beim Auseinanderfahren der Ladebleche 6 gegenläufig und gegensinnig zur Auseinanderfahrbewegung angetrieben werden können.

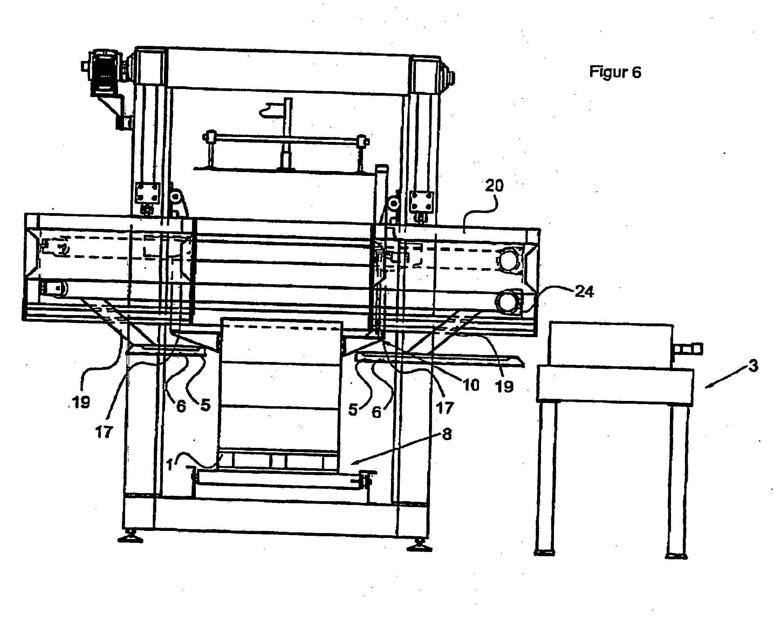

Sind die Ladebleche auseinander gefahren, wie dies Fig. 6 zeigt, und hierdurch die Stückgüter als Schicht auf der Palette 1 abgesetzt, brauchen lediglich die Abstreifer 17 weggefahren bzw. auseinander gefahren werden. Um erneut eine Stückgutschicht aufzunehmen, brauchen lediglich die bereits auseinander gefahrenen Ladebleche 6 durch Verfahren des Hubkopf 20 auf die Höhe des Bereitstellungsplatzes 15 gefahren werden.

Durch die freie Zugänglichkeit des Stapelplatzes 8 von vorne und oben her, vgl. Fig. 1 und Fig. 2, kann mittels einer Einlegevorrichtung 26, die beispielsweise einen in geeigneter Weise antreibbaren Greifarm 27 nach Art eines Roboterarms aufweisen kann, vgl. Fig. 2, eine Zwischenlage beispielsweise in Form einer Pappe oder dergleichen auf die abgesetzte Stückgutschicht gelegt werden bevor die nächste Schicht darauf gestapelt wird.

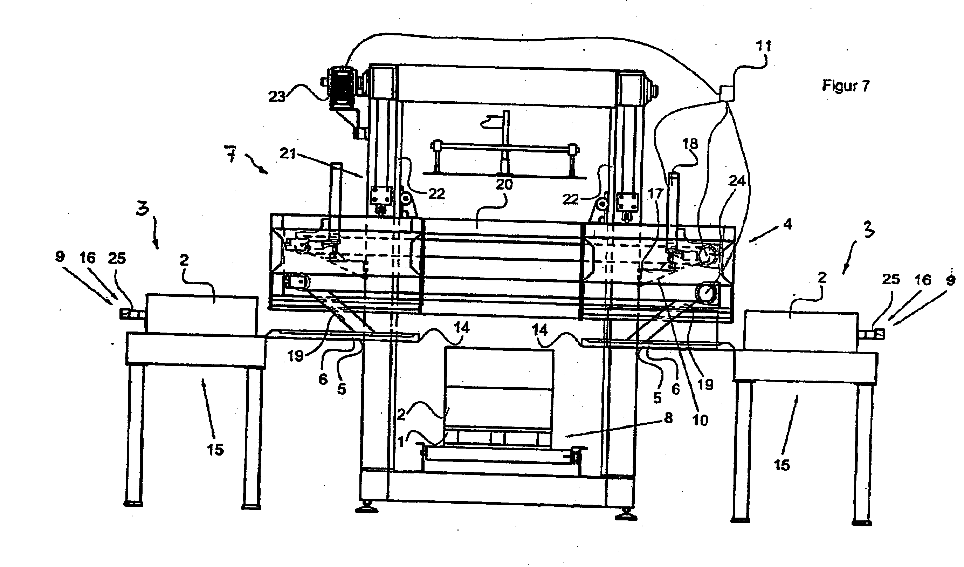

Wie Fig. 7 zeigt, ist es bei der beschriebenen Vorrichtung auch möglich, die beim Beladen auseinander gefahrenen Ladebleche 6 beide zu beladen, und zwar jeweils mit einer Teil-Stückgutschicht, die vorteilhafterweise jeweils eine halbe Stückgutschicht bildet. Hierzu umfasst die zweispurig ausgebildete Stückgutbereitstellungsstation 3 zwei Bereitstellungsplätze 15 rechts und links von dem Stapelplatz 8 neben den auseinander gefahrenen Ladeblechen 6. Die Beladevorrichtung 9 belädt mittels zweier Beladeeinheiten 16 zeitparallel die beiden Ladebleche 6, die anschließend durch Verfahren des Hubkopfs 20 über die Palette 1 bzw. die darauf bereits abgesetzten Stückgutschichten gefahren und sodann zusammengefahren werden, wodurch sich die Tell-Stückgutschichten zu einer ganzen Stückgutschicht vereinigen. Ggf. kann bei asymmetrischer Beladung der beiden Ladebleche 6 ein teilweises Überschieben der einen Teil-Stückgutschicht auf das andere Ladeblech erfolgen. Ggf. kann dies auch nur zum Zentrieren der Stückgutschicht bezüglich der Palette 1 erfolgen. Das Abladen und das dann erfolgende Zurücksetzen zum erneuten Beladen kann in der zuvor beschriebenen Weise erfolgen.

## Patentansprüche

1. Vorrichtung zum Beladen von Paletten (1) mit Stückgütern (2) wie Getränke- oder Lebensmittelgebinden, mit einem Stapelplatz (8), einer Stückgutbereitstellungsstation (3), die zumindest einen untenliegenden Bereitstellungsplatz (15) unterhalb der maximalen Stapelhöhe der auf dem Stapelplatz zu stapelnden Stückgüter aufweist, einer Übersetzvorrichtung (4) zum Übersetzen einer Gruppe von Stückgütern (2) von der Stückgutbereitstellungsstation (3) auf eine an dem Stapelplatz bereit gehaltene Palette (1) und/oder eine bereits darauf übergesetzte Stückgutschicht, wobei die Übersetzvorrichtung (4) zwei separate Unterstützungsebenen (5), vorzugsweise Ladebleche (6), aufweist, die mittels einer Verfahrvorrichtung (7) neben dem Stapelplatz (8) auf und ab sowie über dem Stapelplatz (8) aufeinander zu und voneinander weg verfahrbar sind, ferner mit einer Beladevorrichtung (9) zum Beladen zumindest einer der Unterstützungsebenen (5) mit Stückgütern an der Stückgutbereitstellungsstation (3), einer Abladevorrichtung (10) zum Abladen; insbesondere Herunterschieben, der Stückgüter (2) von der Übersetzvorrichtung (4) beim Auseinanderfahren der Unterstützungsebenen (5) über dem Stapelplatz (8), sowie einer Steuervorrichtung (11) zur Steuerung der Verfahrbewegungen der Unterstützungsebenen (5), die derart ausgebildet ist, dass die Unterstützungsebenen zum Beladen auseinander gefahren sind und auf gegenüberliegenden Seiten des Stapelplatzes (8) bereitgehalten werden, dass die Unterstützungsebenen (5) erst nach dem Beladen während des Übersetzens über der zu beladenden Palette (1) zusammengefahren werden, und dass die Unterstützungsebenen (5) über der zu beladenden Palette (1) zum Entladen unter Relativbewegung zur abzusetzenden Stückgutgruppe auseinander gefahren werden, **dadurch gekennzeichnet, dass** die Vorrichtung derart ausgebildet ist, dass der Stapelplatz (8) während des Beladens der Übersetzvorrichtung (4) mit auseinandergefahrenen Unterstützungsebenen (5) von einer Vorderseite des Stapelplatzes (8) her einen freien Zugang zum Palettenwechsel ohne Wegfahren der Übersetzvorrichtung (4) auch bei der Vorrichtung möglicher maximaler Stapelhöhe auf der Palette aufweist.

2. Vorrichtung nach dem vorhergehenden Anspruch, wobei zumindest eine der Unterstützungsebenen (5) derart ausgebildet ist, dass mehr als eine halbe Stückgutschicht, vorzugsweise eine ganze Stückgutschicht entsprechend der Palettenfläche, auf der genannten Unterstützungsebene (5) abstellbar ist, und dieser zumindest einen Unterstützungsebene eine Verfahrvorrichtung (12) zum teilweisen Verfahren der abgestellten Stückgüter von der einen Unterstützungsebene auf die andere Unterstützungsebene (5) in der zusammengefahrenen Stellung der beiden Unterstützungsebenen (5) über der zu beladenden Palette (1) vorgesehen ist

3. Vorrichtung nach dem vorhergehenden Anspruch, wobei die Verfahrvorrichtung (12) als Überschiebevorrichtung ausgebildet ist und einen verfahrbar ausgebildeten Schieber (13) zum Überschieben der abgestellten Stückgüter von dereinen Unterstützungsebene auf die andere Unterstützungsebene aufweist.

4. Vorrichtung nach einem derbeiden vorhergehenden Ansprüche, wobei die Verfahrvorrichtung (12) eine angetriebene Oberfläche (14), vorzugsweise Rollenteppich, umlaufende Matte oder Förderketten, an der zumindest einen Unterstützungsebene (5) aufweist.

5. Vorrichtung nach einem der vorhergehenden Ansprüche, wobei der Bereitstellungsplatz (15) etwa auf halber Höhe zwischen der maximalen Stapelhöhe und der am Stapelplatz bereitgehaltenen Palette (1) angeordnet ist

6. Vorrichtung nach einem der vorhergehenden Ansprüche, wobei die Stückgutbereitstellungsstation (3) mehrspurig ausgebildet ist und auf gegenüberliegenden Seiten des Stapelplatzes (8) jeweils zumindest einen Bereitstellungsplatz (15) aufweist, und die Beladevorrichtung (9) zumindest zwei Beladeeinheiten (16) aufweist, die jeweils einem der Bereitstellungsplätze (15) zugeordnet und zum Beladen beider Unterstützungsebenen (5) mit jeweils zumindest einer Teil-Stückgutschicht vorgesehen sind.

7. Vorrichtung nach einem der vorhergehenden Ansprüche, wobei die Abladevorrichtung (10) zumindest einen Abstreifer (17) aufweist, gegenüber dem die Unterstützungsebenen (5) beim Auseinanderfahren relativ bewegbar sind.

8. Vorrichtung nach dem vorhergehenden Anspruch sowie Anspruch 3, wobei der Abstreifer (17) von einem Abstreiferantrieb (18) auf die Schnittstelle zwischen den beiden Unterstützungsebenen (5) zu antreibbar ist und den Schieber (13) der Überschiebevorrichtung (12) bildet

9. Vorrichtung nach einem der vorhergehenden Ansprüche, wobei die Abladevorrichtung (10) jeweils eine angetriebene Oberfläche (14), vorzugsweise Rollenteppich, umlaufende Matte oder Förderketten, an den Unterstützungsebenen (5) aufweist, und die Steuervorrichtung (11) Steuermittel zum gegenläufigen Antreiben der genannten Oberflächen (14) beim Auseinanderfahren der Unterstützungsebenen (5) aufweist.

10. Vorrichtung nach einem der vorhergehenden Ansprüche, wobei die Unterstützungsebenen (5) an Schlitten (19) angeordnet sind, die jeweils aufeinander zu und voneinander weg an einem Hubkopf (20) beweglich gelagert sind, der auf einer hinteren Seite des Stapelplatzes (8) angeordnetund an einem Hubwerk (21) höhenverfahrbar gelagert ist, von dem die Unterstützungsebenen (5) nach Art von Gabelstaplerzinken zum Stapelplatz (8) hin vorspringen.

## Claims

1. Device for loading pallets (1) with packaged goods (2) such as beverage or food packages, containing a stacking station (8), an allocation station of packaged goods (3), which features at least one low level allocation station (15) below the maximum stacking height of the packaged goods to be stacked at the stacking station, a transfer unit (4) to transfer a group of packaged goods (2) from the allocation station of packaged goods (3) to a pallet (1) waiting at the stacking station and/or to a layer of packaged goods having already been transferred onto this pallet, the transfer unit (4) featuring two separate supporting levels (5), preferably loading plates (6) which by means of a trolley (7) can be moved upwards and downwards next to the stacking place (8) as well as towards and apart from each other above the stacking place (8), furthermore containing a loading device (9) to load at least one of the supporting levels (5) with packaged goods at the allocation station of packaged goods (3), an unloading device (10) for unloading, especially pushing, the packaged goods (2) from the transfer unit (4) when the supporting levels (5) drive apart above the stacking place (8), as well as a control device (11) to control the transfer motions of the supporting levels (5), which is designed in such a way that the supporting levels are driven apart for loading and are waiting at opposite sides of the stacking place (8), that the supporting levels (5) are only driven towards each other after loading during the transfer above the pallet (1) to be loaded, and that the supporting levels (5) are driven apart for unloading above the pallet (1) to be loaded under relative motion relating to the group of packaged goods to be laid down, **characterised in that** the device is designed in a way that, during loading of the transfer unit (4) with the supporting levels (5) driven apart, the stacking place (8) features free access for pallet change from a front side of the stacking place (8) without removing the transfer unit (4) even with a maximum stacking height on the pallet possible for the device.

2. Device according to the preceding claim, in which at least one of the supporting levels (5) is designed in a way that more than half a layer of packaged goods, preferably a whole layer of packaged goods according to the pallet size, can be positioned on the mentioned supporting level (5), and for at least one supporting level, a trolley (12) is planned to transfer partly the positioned packaged goods from one supporting level to the other supporting level (5) while both supporting levels (5) are driven towards each other above the pallet (1) to be loaded.

3. Device according to the preceding claim, the trolley (12) being designed as pushing unit and featuring a displaceable pusher (13) to push the positioned packaged goods from one supporting level to the other supporting level.

4. Device according to one of the two preceding claims, the trolley (12) featuring a driven surface (14), preferably roller carpet, revolving mat or conveyor chains, on at least one supporting level (5).

5. Device according to one of the preceding claims, the allocation station (15) being positioned at approximately half height between the maximum stacking height and the pallet (1) waiting at the stacking station.

6. Device according to one of the preceding claims, the allocation station of packaged goods (3) featuring a multilane construction and showing on each opposite side of the stacking place (8) at least one allocation station (15), and the loading device (9) featuring at least two loading units (16), each one attributed to one of the allocation stations (15) and designed to load both supporting levels (5) each with at least a part of the layer of packaged goods.

7. Device according to one of the preceding claims, the unloading device (10) featuring at least one stripper (17), opposite to which the supporting levels (5) are relatively movable when moving apart from each other.

8. Device according to the preceding claim as well as claim 3, the stripper (17) being driven by a stripper drive (18) towards the interface between both supporting levels (5) and being the pusher (13) of the transfer unit (12).

9. Device according to one of the preceding claims, the unloading device (10) featuring at each supporting level (5) a driven surface (14), preferably roller carpet, revolving mat or conveyor chains, and the control device (11) featuring control means to drive the mentioned surfaces (14) in opposite direction to each other when moving apart the supporting levels (5).

10. Device according to one of the preceding claims, the supporting levels (5) being arranged on carriages (19) which, being movable towards and apart from each other, are integrated in a lifting head (20) arranged at a rear side of the stacking place (8) and hinged vertically movable to a lifting unit (21), from which the supporting levels (5) protrude towards the stacking place (8) like forks of a fork lift truck.

## Revendications

1. Dispositif pour charger des palettes (1) de petites marchandises (2) telles que fardeaux de boissons ou alimentaires, y compris une place d'empilage (8), une station de mise à disposition des petites marchandises (3) comportant au moins une place de mise à disposition (15) aménagée en bas et étant inférieure à la hauteur d'empilage maximale des petites marchandises à empiler sur la place d'empilage, un dispositif de transfert (4) pour transférer un groupe de petites marchandises (2) de la station de mise à disposition des petites marchandises (3) à une palette (1) aménagée sur la place d'empilage et/ou sur une couche de petites marchandises ayant déjà été transférée sur cette palette, le dispositif de transfert (4) comportant deux niveaux de soutien (5) séparés, de préférence des tôles de chargement (6) déplaçables par un dispositif de déplacement (7) en direction verticale à côté de la place d'empilage (8) ainsi qu'en direction horizontale en dessus de la place d'empilage (8), un dispositif de chargement (9) pour charger au moins l'un des niveaux de soutien (5) de petites marchandises à la station de mise à disposition des petites marchandises (3), un dispositif de déchargement (10) pour décharger, particulièrement pousser les petites marchandises (2) du dispositif de transfert (4) lors de la séparation des niveaux de soutien (5) en dessus de la place d'empilage (8), ainsi qu'un dispositif de commande (11) pour commander les mouvements de déplacement des niveaux de soutien (5) conçu de sorte que les niveaux de soutien sont séparés pour le chargement et tenus à disposition de part et d'autre de la place d'empilage (8), que les niveaux de soutien (5) sont réunis seulement après le chargement lors du transfert en dessus de la palette (1) à charger, et que les niveaux de soutien (5) en dessus de la palette (1) à charger sont séparés pour le déchargement avec mouvement relatif par rapport au groupe des petites marchandises à déposer, **caractérisé en ce que** le dispositif est conçu de sorte que, lors du chargement du dispositif de transfert (4) avec niveaux de soutien (5) séparés, la place d'empilage (8) soit librement accessible d'un côté avant de la place d'empilage (8) pour échanger les palettes sans enlever le dispositif de transfert (4), même lorsque la hauteur d'empilage sur la palette est la hauteur maximale possible pour le dispositif.

2. Dispositif selon la revendication précédente, au moins l'un des niveaux de soutien (5) étant conçu de sorte que plus d'une demi couche de petites marchandises, de préférence une couche de petite marchandises entière, selon la taille de palette, puisse être positionnée sur le niveau de soutien (5) cité, et qu'au moins pour un niveau de soutien, un dispositif de déplacement (12) soit prévu pour le déplacement partiel des petites marchandises positionnées, de l'un des niveaux de soutien vers l'autre niveau de soutien (5), les deux niveaux de soutien étant en position réunie en dessus de la palette (1) à charger.

3. Dispositif selon la revendication précédente, le dispositif de déplacement (12) étant conçu en tant que dispositif de poussée et étant équipé d'un poussoir (13) déplaçable pour pousser les petites marchandises positionnées, de l'un des niveaux de soutien vers l'autre niveau de soutien.

4. Dispositif selon l'une des deux revendications précédentes, le dispositif de déplacement (12) étant équipé au moins à l'un des niveaux de soutien (5) d'une surface entraînée (14), de préférence un tapis à rouleaux, un tapis de transfert ou des chaînes transporteuses.

5. Dispositif selon l'une des revendications précédentes, la place de mise à disposition (15) étant arrangée environ à demi hauteur entre la hauteur d'empilage maximale et la palette (1) aménagée à la place d'empilage.

6. Dispositif selon l'une des revendications précédentes, la station de mise à disposition des petites marchandises (3) étant conçue à plusieurs voies et étant équipée sur chaque côté opposé à la place d'empilage (8), d'une place de mise à disposition (15) au moins, et que le dispositif de chargement (9) soit équipé de deux unités de chargement (16) au moins dont chacune est attribuée à l'une des places de mise à disposition (15) et conçue pour charger chacun des deux niveaux de soutien (5) d'au moins une partie de la couche de petites marchandises.

7. Dispositif selon l'une des revendications précédentes, le dispositif de déchargement (10) étant équipé au moins d'un racleur (17) par rapport auquel les niveaux de soutien (5) sont relativement déplaçables lors de leur séparation.

8. Dispositif selon la revendication précédente ainsi que selon la revendication 3, le racleur (17) étant entraînable par un entraînement de racleur (18) vers l'interface située entre les deux niveaux de soutien (5), et étant le poussoir (13) du dispositif de poussée (12).

9. Dispositif selon l'une des revendications précédentes, le dispositif de déchargement (10) étant équipé à chaque niveau de soutien (5) d'une surface entraînée (14), de préférence un tapis à rouleaux, un tapis de transfert ou des chaînes transporteuses, et que le dispositif de commande (11) soit équipé d'outils de commande pour l'entraînement opposé des surfaces (14) citées lors de la séparation des niveaux de soutien (5).

10. Dispositif selon l'une des revendications précédentes, les niveaux de soutien (5) étant arrangés à des chariots (19) qui, pouvant être séparés et réunis par mouvement, sont intégrés dans une tête de levage (20) arrangée à un côté arrière de la place d'empilage (8) et connectée, avec possibilité de déplacement vertical, à un dispositif de levage (21) à partir duquel les niveaux de soutien (5) saillissent vers la place d'empilage (8) à la manière de fourchons d'un chariot élévateur à fourches.
